# EUROPÄISCHE PATENTSCHRIFT

(11) **EP 1 769 977 B1**
(45) Veröffentlichungstag und Bekanntmachung des Hinweises auf die Patenterteilung: **15.04.2009**
(21) Anmeldenummer: 06120859.1
(22) Anmeldetag: 19.09.2006
(51) Int. Cl.: B60R 21/13

(54) **Überrollschutzsystem für Kraftfahrzeuge mit einem aufstellbaren Überrollkörper**
Roll-Over protection system for motor vehicles with an upraising Roll-Over body
Système d'arceau de sécurité pour véhicule motorisé avec corps de sécurité extensible en cas de retournement

(30) Priorität: 01.10.2005 DE 102005047274
(43) Veröffentlichungstag der Anmeldung: 04.04.2007
(73) Patentinhaber: ISE Automotive GmbH, 51702 Bergneustadt (DE)
(72) Erfinder: Röhner, Stephan, 44287, Dortmund (DE); Nowack, Reinhard, 57489, Drolshagen (DE); Janisch, Mirko, 53797, Lohmar (DE); Liesaus, Frank, 51702, Bergneustadt (DE); Menne, Hans-Gerd, 51702, Bergneustadt (DE)
(74) Vertreter: Fuchs

(56) Entgegenhaltungen:
- EP-A- 0 411 449
- DE-A1- 4 017 778
- DE-C1- 3 925 515
- US-A1- 2005 280 253

## Beschreibung

Die Erfindung bezieht sich auf ein Überrollschutzsystem für Kraftfahrzeuge, mit zwei sensorgesteuert mittels eines Antriebes aus einer Grundstellung in eine Stützstellung aufstellbaren, Bügelköpfe aufweisenden Überrollbügeln, die sitzbezogen in einem fahrzeugfesten Trägerkörper verschwenkbar um eine Achse in Fahrzeuglängsrichtung (X) beabstandet nebeneinander senkrecht zur jeweiligen Achse, angelenkt sind.

Derartige Überrollschutzsysteme dienen zum Schutz der Insassen in Kraftfahrzeugen ohne schützendes Dach, typischerweise in Cabriolets oder Roadstern bei einem Überschlag, da das Fahrzeug über den aufgestellten Überrollkörper abrollen wird, der den Insassen einen Überlebensraum bietet.

Es ist dabei bekannt, einen die gesamte Fahrzeugbreite überspannenden, fest installierten Überrollbügel vorzusehen. Bei dieser Lösung wird der erhöhte Luftwiderstand und das Auftreten von Fahrgeräuschen als nachteilig empfunden, abgesehen von der Beeinträchtigung des Fahrzeugaussehens.

Es ist auch bekannt, jedem Fahrzeugsitz einen höhenunveränderlich fest installierten, d.h. starren, U-förmigen Überrollbügel zuzuordnen. Diese Lösung wird typischerweise bei Roadstern zur Unterstreichung des sportlichen Aussehens eingesetzt.

Weit verbreitet bei Cabriolets sind konstruktive Lösungen, bei denen der Überrollkörper im Normalzustand eingefahren ist, und im Gefahrenfall, also bei einem drohenden Überschlag, sehr schnell in eine schützende Position aufgestellt wird, um zu verhindern, dass die Fahrzeuginsassen durch das sich überschlagende Fahrzeug erdrückt werden.

Diese sogenannten "aktiven" Überrollschutzsysteme weisen typischerweise einen in einem fahrzeugfesten Führungskörper geführten U-förmigen Überrollbügel oder aus einem Profilkörper gebildeten Überrollkörper auf, wobei der Führungskörper in einem Kassetten-Gehäuse, das Seitenteile und ein Bodenteil aufweist, befestigt ist. Dieser Überrollbügel bzw. Überrollkörper wird im Normalzustand gegen die Vorspannkraft mindestens einer Antriebs-Druckfeder durch eine Haltevorrichtung in einer unteren Ruhelage gehalten, und ist im Überschlagfall, sensorgesteuert unter Lösen der Haltevorrichtung, durch die Federkraft der Antriebs-Druckfeder in eine obere, schützende Stellung bringbar, wobei eine dann in verzahnenden Wirkeingriff tretende Verriegelungseinrichtung, die Wiedereinfahrsperre, ein Zurückdrücken des Überrollbügels verhindert. Dabei ist typischerweise jedem Fahrzeugsitz eine Kassette zugeordnet.

Eine derartige Kassetten-Konstruktion eines Überrollbügelschutzsystems mit einem U-förmigen Überrollbügel zeigt beispielsweise die DE 100 40 642 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Dieses Prinzip weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für zwei nebeneinander angeordnete U-förmige Überrollbügel aufweist sowie bestehend zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern.

Sowohl die Kassetten-Konstruktionen als auch die Querträger-Konstruktionen sind in vielfältigen Ausführungsformen, angepasst an den jeweiligen Fahrzeugtyp, auf dem Markt eingeführt und in Betrieb.

Bei beiden Konstruktionen sind die Überrollbügel im wesentlichen vertikal linear aufstellbar gehaltert. Es ist jedoch auch eine Überrollschutz-Konstruktion bekannt, die zwei, bezogen auf die Fahrzeugquerrichtung, nebeneinander angeordnete Überrollbügel aufweist, die jeweils um eine im wesentlichen in Fahrzeuglängsrichtung, der sogenannten X-Richtung, verlaufenden Schwenkachse schwenkbar sind, und somit im Gefahrenfall aus einer abgesenkten Ruhelage in eine nach oben gerichtete Stützlage (und später zurück) schwenkbar sind. Diese Überrollbügel werden im folgenden als Drehbügel bezeichnet.

Eine derartige Konstruktion zeigen die DE 39 25 515 C1 und die DE 40 17 778 A1. Die DE 39 25 513 A1 zeigt dabei zusätzlich die zugehörige Rahmenkonstruktion zur Aufnahme der beiden Drehbügel und der zugehörigen Komponenten des Überrollschutzsystems wie Antrieb des Drehbügels, Verriegelungsvorrichtung (Wiedereinfahrsperre) etc.

Der Wunsch der Fahrzeughersteller nach einem aktiven Überrollschutzsystem setzt sich aufgrund des gestiegenen Sicherheitsbewusstseins verstärkt auch in Richtung auf mittlere und kleine Fahrzeuge fort. Aufgrund der geringeren Einbauräume in solchen Fahrzeugen sind hierbei besondere Überlegungen anzustellen, um Überrollbügel mit der notwendigen hohen Überrolltangente unterzubringen. Es hat sich gezeigt, dass das vorbekannte System mit Drehbügeln, die sich aus der abgesenkten Ruhelage quer zur Fahrzeuglängsrichtung drehend aufstellen, eine gute Basis für die vorgenannten Überlegungen zur Lösung der entsprechenden Probleme gibt.

Von einem derartigen System mit Drehbügeln geht auch die Erfindung aus.

Im bekannten Fall sind die beiden nebeneinander angeordneten Drehbügel fluchtend in einer Ebene quer zur Fahrzeuglängsrichtung, d.h. auf gleicher Höhe in der X-Richtung, drehbar angelenkt.

Das die Höhe der Überrolltangente bestimmende Höhenmaß der Drehbügel ist dadurch begrenzt, weil sich die abgelegten Drehbügel maximal, mit vorgegebenem Minimalabstand, Stirn-an-Stirn berühren können. Gerade bei mittleren und kleinen Fahrzeugen, die eine begrenzte Fahrzeugbreite aufweisen, reicht das im Fahrzeug zur Verfügung stehende Maß zwischen den Seitenwänden der Karosserie nicht aus, Drehbügel mit einem Höhenmaß zu integrieren, welche die notwendige hohe Überrolltangente gewährleisten.

Ein Überrollschutzsystem mit den Merkmalen des Oberbegriffs des Anspruchs 1 ist bekannt aus der EP 0 411 449. Als nachteilig dabei wird angesehen, dass die Baugröße des Systems nicht optimiert ist. Mit anderen Worten ist die Baugröße für den aufzuspannenden Überlebensraum relativ groß.

Der Erfindung liegt die Aufgabe zugrunde, das eingangs bezeichnete Überrollschutzsystem hinsichtlich der Unterbringung der Drehbügel so auszubilden, dass auch bei mittleren und kleinen Fahrzeugen ein Höhenmaß der Drehbügel erzielbar ist, welches die notwendige hohe Überrolltangente für den Erhalt eines sicheren Überlebensraumes im Fahrzeug gewährleistet.

Die Lösung dieser Aufgabe gelingt bei einem Überrollschutzsystem für Kraftfahrzeuge, mit zwei sensorgesteuert mittels eines Antriebes aus einer Grundstellung in eine Stützstellung aufstellbaren, Bügelköpfe aufweisenden Überrollbügeln, die sitzbezogen in einem fahrzeugfesten Trägerkörper verschwenkbar um eine Achse in Fahrzeuglängsrichtung (X) beabstandet nebeneinander senkrecht zur jeweiligen Achse, angelenkt sind, wobei die Überrollbügel so angelenkt sind, dass sie zumindest mit ihren Bügelköpfen in die Grundstellung ablegbar sind, gemäß der Erfindung, dass die Überrollbügel in der Grundstellung zumindest teilweise überlappend versetzt in der Fahrzeuglängsrichtung sind.

Durch diese erfindungsgemäßen Maßnahmen mit Drehbügeln, die sich im abgelegten Zustand zumindest im Bügelkopfbereich überlappen, können Drehbügel mit einem großen Höhenmaß eingesetzt werden, wodurch auch gerade bei kleinen und mittleren Fahrzeugen eine große überkragende Abstützhöhe und damit eine relativ hochliegende, den Überlebensraum umgrenzende Überrolltangente erreicht wird.

Ausgestaltungen und Weiterbildungen der Erfindung sind in Unteransprüchen gekennzeichnet und ergeben sich auch aus der Figurenbeschreibung.

Anhand eines in den Zeichnungen in verschiedenen Ansichten und Zuständen dargestellten Ausführungsbeispieles einschließlich einer abgewandelten Variante wird die Erfindung näher beschrieben:

Es zeigen:
- Fig. 1: in einer perspektivischen Darstellung eine aktive Überrollschutz-Vorrichtung für Kraftfahrzeuge mit aufgestellten Drehbügeln, die in einem fahrzeugfesten Trägerkörper versetzt zueinander in Fahrzeuglängsrichtung und überlappbar mit ihren Bügelköpfen nebeneinander quer zu dieser Längsrichtung angelenkt sind,
- Fig. 2: die Vorrichtung nach Fig. 1 in einer Ausschnitt-Darstellung mit teilweise weggebrochenem Trägerkörper, wobei ein Drehbügel aufgestellt und der andere abgelegt ist,
- Fig. 3: die Vorrichtung nach Fig. 1 mit abgelegten Drehbügeln,
- Fig. 4: die Vorrichtung nach Fig. 2, jedoch mit beiden Drehbügeln im abgelegten Zustand,
- Fig. 5: eine Vorderansicht der Vorrichtung nach Fig. 1 ohne Frontwand des Trägerkörpers,
- Fig. 6: eine Querschnitt-Darstellung der versetzt und überschneidend abgelegten Drehbügel, und
- Fig. 7: in einer schematisierten Draufsicht eine Variante des Ausführungsbeispieles, bei welcher die Drehbügel auf gleicher Höhe in Fahrzeuglängsrichtung angelenkt sind, jedoch Bügelköpfe mit geringeren Abmaßen in dieser Richtung aufweisen.

Die Figuren zeigen ein Überrollschutzsystem für Kraftfahrzeuge, insbesondere für Cabriolets mittlerer oder kleinerer Fahrzeuge, bei dem in einem fahrzeugfest angebrachten Trägerkörper, z.B. in einem schematisiert dargestellten Grundrahmen 1, der mittels zweier Befestigungswinkel 1 b an der Karosserie angeschraubt ist, zwei Überrollbügel 2, sogenannte Drehbügel, in Lagern 3 um die Fahrzeuglängsrichtung verschwenkbar nebeneinander quer zu dieser Richtung angelenkt sind. Jeder dieser Drehbügel 2 weist ein Basisteil 2 a und einen gerundeten Bügelkopf 2 b auf. Der Bügelkopf 2 b kann unterschiedliche geometrische Konfigurationen haben. Vorzugsweise ist er jedoch, entweder bogenförmig bzw. nach Art einer "Ochsenzunge" wie dargestellt, oder U-förmig mit langgestreckten Bügelschenkeln, die am Basisteil befestigt sind, ausgebildet. Er bestimmt maßgebend das für eine hohe Überrolltangente notwendige Höhenmaß.

Die Überrollbügel sind typischerweise Metallteile, die nach einschlägigen Verfahren hergestellt werden, wobei typischerweise die Bügelköpfe mit einem Kunststoff umschäumt sind.

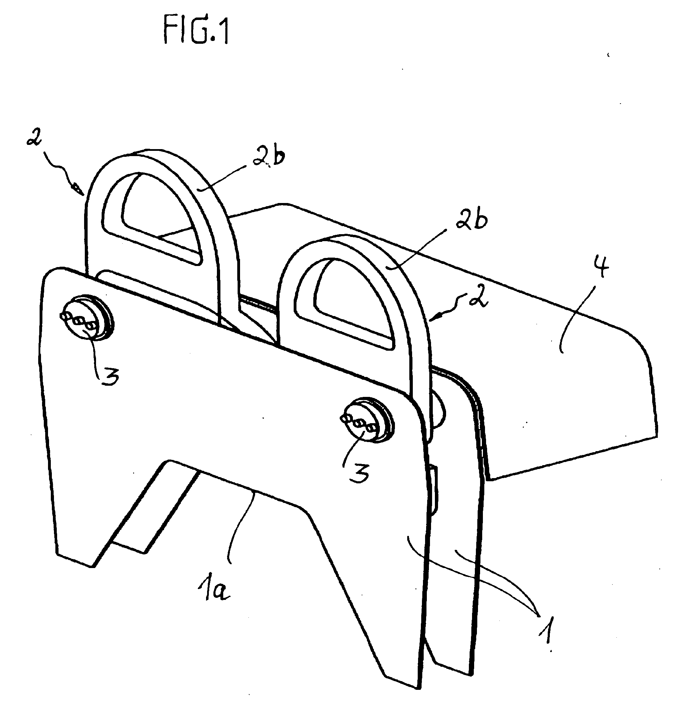

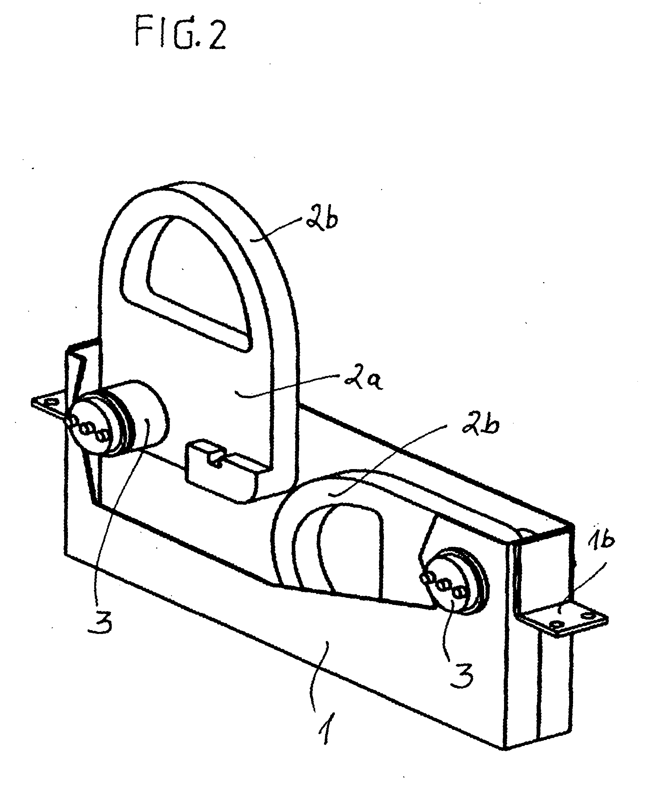

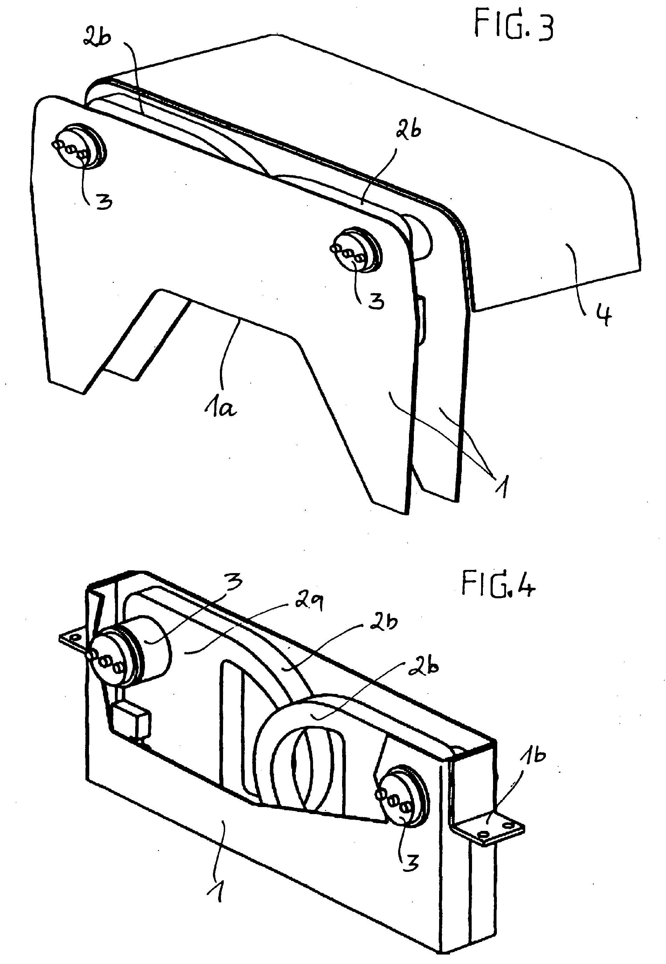

In der Grundstellung gemäß den Figuren 3 bis 6 sind die Überrollbügel 2 waagrecht liegend, bündig mit der Fahrzeugbrüstung abschließend, angelenkt. Im Fall eines drohenden Überschlages werden sie sehr schnell, d.h. im ms-Bereich, in die Stützstellung hochgeschwenkt, wie es in den Figuren 1 und 2 (teilweise) dargestellt ist.

Die notwendigen Antriebe, Wiedereinfahrsperren, Sensorik sowie die übrigen, üblichen Komponenten eines Überroll-Schutzsystems sind nicht dargestellt. Sie können beispielsweise mit bekannten Mitteln, wie in der eingangs zitierten DE 39 25 513 A1 dargestellt, realisiert werden. Der Grundrahmen 1 besitzt vorteilhafterweise einen Ausschnitt 1 a für eine Durchlademöglichkeit. Eine schematisch dargestellte Abdeckung 4 steht symbolisch für eine optisch ansprechende Integration des Systems in das Fahrzeug.

Erfindungsgemäß sind, wie insbesondere die Figuren 4 - 6 zeigen, durch entsprechende Ausbildung der Lager 3 die Überrollbügel 2 mit ihren Basisteilen 2 a in der Fahrzeuglängsrichtung versetzt zueinander angelenkt, derart, dass sich die Bügelköpfe 2 b im abgelegten Zustand überschneiden, d.h. zumindest teilweise überlappen. Dadurch können die Bügelköpfe ein größeres Höhenmaß als im bekannten Fall besitzen und als Folge davon eine hohe Überrolltangente, auch bei kleinen und mittleren Fahrzeugen, aufspannen.

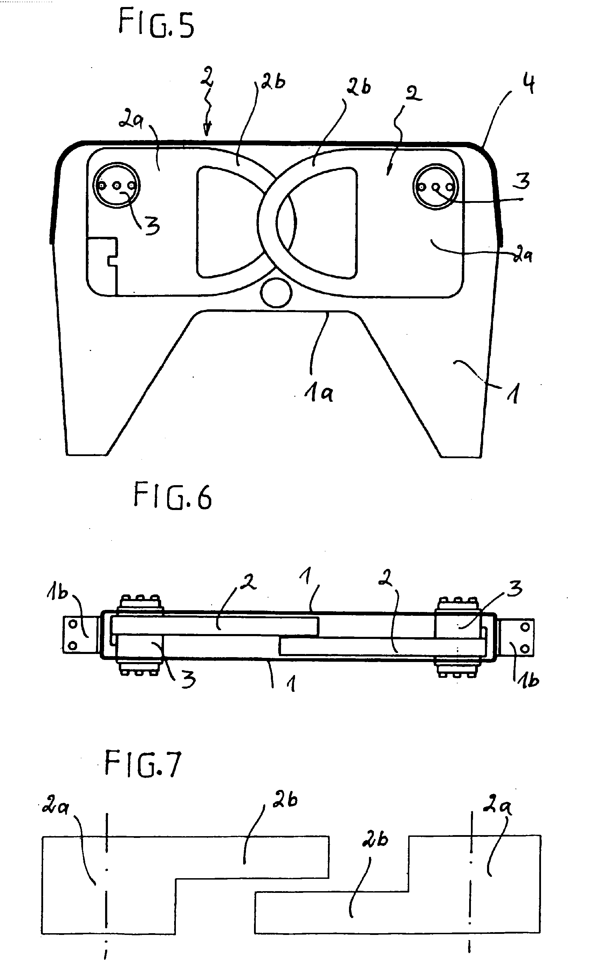

Die Figur 7 zeigt eine Variante, bei welcher die Drehbügel mit ihren Basisteilen 2 a auf gleicher Höhe, d. h. ohne Versatz in der Fahrzeuglängsrichtung angelenkt sind, die zugehörigen Bügelköpfe 2 b jedoch geringere Abmaße in dieser Achse als die Basisteile aufweisen, und zwar bezogen auf die beiden Drehbügel komplementär zueinander, so dass die Bügelköpfe 2 b überlappbar in die Grundstellung ablegbar sind.

Neben den Möglichkeiten zur Realisierung der zugehörigen Komponenten des Überrollbügelsystems, die sich aus der zitierten
DE 39 25 513 A1 ergeben, sind auch nachstehende Komponenten einsetzbar:
- eine jedem Drehbügel zugeordnete entsprechend stark dimensionierte Spiralfeder als Antrieb zum Aufstellen des jeweiligen Drehbügels in Verbindung mit einer sensorgesteuert auslösbaren Haltevorrichtung zum Niederhalten des vorgespannten Drehbügels in der Grundstellung; dabei eignen sich als Antriebe prinzipiell auch pyrotechnische, pneumatische oder hydrauliche Antriebe
- eine bogenförmige Zahnstange, die am Basisteil des Drehbügels befestigt ist in Verbindung mit einer karosseriefest angelenkten Sperrklinke als Verriegelungseinrichtung (Wiedereinfahrsperre), mit einer Vorrichtung zur gemeinsamen Entriegelung beider Sperrklinken; dabei kann die Anordnung der Verriegelungselemente auch umgekehrt sein, d. h. die Sperrklinke ist am Drehbügel und die Zahnstange karosseriefest befestigt,
- eine Lagerung, die als Drehachse dient und gleichzeitig Crashkräfte aufnimmt,
- ein Anschlag, der die rotatorische Bewegung der Drehbügel begrenzt und gleichzeitig Crashkräfte aufnehmen kann,
- eine Reversiereinrichtung zum Zurückstellen der Drehbügel

Weitere konstruktive Aspekte können sein:
- Lagerung der beiden Drehbügel in den beiden Wänden des Grundrahmens 1 derart, dass damit die beiden Wände spielfrei gegeneinander verspannt werden und damit das System aussteifen,
- Lagerung der Drehbügel derart, dass die Drehbügel im abgelegten Zustand versetzt angeordnet sind und im aufgestellten Zustand eine fluchtende Stellung einnehmen. Prinzip: Wanknutscheibe
- Ausbildung des Systems derart, dass die aufgestellten Drehbügel eine nach außen weisende Winkelstellung einnehmen, d.h. der Aufstellwinkelhub ist größer als 90 Grad.

### Bezugszeichenliste

- 1: Grundrahmen
- 1 a: Ausschnitt
- 1 b: Befestigungswinkel
- 2: Überrollbügel (Drehbügel)
- 2 a: Basisteil
- 2 b: Bügelkopf
- 3: Lager
- 4: Abdeckung

## Patentansprüche

1. Überrollschutzsystem für Kraftfahrzeuge, mit zwei sensorgesteuert mittels eines Antriebes aus einer Grundstellung in eine Stützstellung aufstellbaren, Bügelköpfe (2b) aufweisenden Überrollbügeln (2), die sitzbezogen in einem fahrzeugfesten Trägerkörper (1) jeweils verschwenkbar um eine Achse in Fahrzeuglängsrichtung (X) beabstandet nebeneinander senkrecht zur jeweiligen Achse, angelenkt sind, wobei die Überrollbügel (2) so angelenkt sind, dass sie zumindest mit ihren Bügelköpfen (2b) in die Grundstellung ablegbar sind, **dadurch gekennzeichnet, dass** die Überrollbügel (2) in der Grundstellung zumindest teilweise überlappend versetzt in der Fahrzeuglängsrichtung sind.

2. Überrollschutzsystem nach Anspruch 1, **dadurch gekennzeichnet, dass** die Überrollbügel (2) in der Fahrzeuglängsrichtung versetzt zueinander angelenkt sind.

3. Überrollschutzsystem nach Anspruch 1, **dadurch gekennzeichnet, dass** die Überrollbügel ohne gegenseitigen Versatz in der Fahrzeuglängsrichtung angelenkt sind und Bügelköpfe (2 b) mit geringeren Abmaßen in dieser Achse aufweisen.

4. Überrollschutzsystem nach einem der Ansprüche 1 bis 3, **dadurch gekennzeichnet, dass** die Überrollbügel (2) im Grundzustand waagrecht liegend angelenkt sind.

5. Überrollschutzsystem nach einem der Ansprüche 1 bis 4, **dadurch gekennzeichnet, dass** die Überrollbügel(2) jeweils aus einem anlenkbaren Basisteil (2 a) und einem Bügelkopf (2 b) bestehen.

6. Überrollschutzsystem nach einem der Ansprüche 1 bis 5, **dadurch gekennzeichnet, dass** die Bügelköpfe (2 b) mit Kunststoff umschäumt sind.

7. Überrollschutzsystem nach Anspruch 5 oder 6, **dadurch gekennzeichnet, dass** das Basisteil (2 a) plattenförmig ausgebildet ist, und der Bügelkopf (2 b), bogenförmig ausgebildet, am Basisteil angeformt ist.

8. Überrollschutzsystem nach Anspruch 5 oder 6, **dadurch gekennzeichnet, dass** das Basisteil plattenförmig ausgebildet ist und der Bügelkopf, U-förmig mit langgestreckten Bügelschenkeln ausgebildet, mit diesen Schenkeln am Basisteil befestigt ist.

9. Überrollschutzsystem nach einem der Ansprüche 1 bis 8, **dadurch gekennzeichnet, dass** als Antrieb zum Aufstellen der Überrollbügel (2) jeweils eine zugeordnete Spiralfeder vorgesehen ist.

10. Überrollschutzsystem nach einem der Ansprüche 1 bis 9, **dadurch gekennzeichnet, dass** zum Verriegeln des Überrollbügels in der Stützstellung jeweils eine am Überrollbügel angebrachte, bogenförmige Zahnstange in Verbindung mit einer karosseriefest angelenkten Sperrklinke vorgesehen ist.

11. Überrollschutzsystem nach Anspruch 10, **dadurch gekennzeichnet, dass** eine Vorrichtung zur gemeinsamen Entriegelung beider Sperrklinken vorgesehen ist.

12. Überrollschutz nach einem der Ansprüche 1 bis 11, **dadurch gekennzeichnet, dass** der fahrzeugfeste Trägerkörper (1a) einen Ausschnitt (1 a) für eine Durchlademöglichkeit besitzt

## Claims

1. A roll-over protection system for passenger cars, having two U-shaped roll-over bars (2) with bar heads (2b), the U-shaped roll-over bars being raisable from a normal position into a supporting position under sensor control by means of a drive, and each being hinged, in relation to the seat, in a support (1) secured to the vehicle so that they pivot about an axis in the longitudinal direction of the vehicle (X) spaced side by side perpendicular to the axis, wherein the U-shaped roll-over bars (2) are so hinged that at least with their U-shaped heads (2b) they can be folded away into the normal position, **characterised in that** in the normal position the U-shaped roll-over bars (2) are offset in the longitudinal direction of the vehicle and at least partially overlap.

2. A roll-over protection system according to claim 1, **characterised in that** the U-shaped roll-over bars (2) are hinged offset with respect to one another in the longitudinal direction of the vehicle.

3. A roll-over protection system according to claim 1, **characterised in that** the U-shaped roll-over bars are hinged without mutual offset in the longitudinal direction of the vehicle and have bar heads (2b) with smaller dimensions in this axis.

4. A roll-over protection system according to any one of claims 1 to 3, **characterised in that** in the normal state the U-shaped roll-over bars (2) are hinged lying horizontally.

5. A roll-over protection system according to any one of claims 1 to 4, **characterised in that** the U-shaped roll-over bars (2) each comprise a hinged base part (2a) and a bar head (2b).

6. A roll-over protection system according to any one of claims 1 to 5, **characterised in that** the bar heads (2b) are clad with foamed plastics material.

7. A roll-over protection system according to claim 5 or 6, **characterised in that** the base part (2a) is in the form of a plate and the bar head (2b) is curved and integrally formed with the base part.

8. A roll-over protection system according to claim 5 or 6, **characterised in that** the base part is in the form of a plate and the bar head, which is U-shaped with elongate side pieces, is fastened with these side pieces to the base part.

9. A roll-over protection system according to any one of claims 1 to 8, **characterised in that** a respective associated helical spring is provided as the drive means for raising the U-shaped roll-over bars (2).

10. A roll-over protection system according to any one of claims 1 to 9, **characterised in that**, to lock the U-shaped roll-over bar in the support position, there is provided a respective curved toothed rack mounted on the U-shaped roll-over bar in conjunction with a locking pawl mounted pivotally on the vehicle body.

11. A roll-over protection system according to claim 10, **characterised in that** a device for joint unlocking of both locking pawls is provided.

12. A roll-over protection system according to any one of claims 1 to 11, **characterised in that** the support (1a) secured to the vehicle has a cut-out (1 a) for the passage of cargo items.

## Revendications

1. Système de protection anti-renversement pour véhicules automobiles, avec deux arceaux de sécurité (2) pouvant être relevés dans une position de soutien, en étant commandés par capteur, au moyen d'un système d'entraînement, en partant d'une position de base, et présentant des têtes d'arceau (2b), lesdits arceaux étant articulés en étant associés à des sièges dans un corps de support (1) solidaire du véhicule, respectivement de façon à pouvoir pivoter autour d'un axe dans la direction longitudinale de véhicule (X), en étant espacés l'un de l'autre, perpendiculairement à l'axe respectif, dans lequel les arceaux de sécurité (2) sont articulés de telle sorte qu'ils peuvent être rabattus dans la position de base, au moins au niveau de leurs têtes d'arceau (2b), **caractérisé en ce que** dans la position de base, les arceaux de sécurité (2) sont décalés dans la direction longitudinale de véhicule en se recouvrant au moins partiellement.

2. Système de protection anti-renversement selon la revendication 1, **caractérisé en ce que** les arceaux de sécurité (2) sont articulés en étant décalés l'un par rapport à l'autre dans la direction longitudinale de véhicule.

3. Système de protection anti-renversement selon la revendication 1, **caractérisé en ce que** les arceaux de sécurité sont articulés dans la direction longitudinale de véhicule sans décalage mutuel et présentent des têtes d'arceau (2b) avec des dimensions plus réduites sur cet axe.

4. Système de protection anti-renversement selon l'une quelconque des revendications 1 à 3, **caractérisé en ce qu'**à l'état de base, les arceaux de sécurité (2) sont articulés en étant couchés horizontalement.

5. Système de protection anti-renversement selon l'une quelconque des revendications 1 à 4, **caractérisé en ce que** les arceaux de sécurité (2) se composent respectivement d'une pièce de base (2a) pouvant être articulée et d'une tête d'arceau (2b).

6. Système de protection anti-renversement selon l'une quelconque des revendications 1 à 5, **caractérisé en ce que** les têtes d'arceau (2b) sont entourées de matière synthétique.

7. Système de protection anti-renversement selon la revendication 5 ou 6, **caractérisé en ce que** la pièce de base (2a) est réalisée en forme de plaque et la tête d'arceau (2b), en étant réalisée en forme d'arc, est rapportée à la pièce de base.

8. Système de protection anti-renversement selon la revendication 5 ou 6, **caractérisé en ce que** la pièce de base est réalisée en forme de plaque et la tête d'arceau, en étant réalisée en forme de U avec des branches d'arceau allongées, est fixée à la pièce de base par lesdites branches.

9. Système de protection anti-renversement selon l'une quelconque des revendications 1 à 8, **caractérisé en ce que** comme système d'entraînement pour relever les arceaux de sécurité (2), respectivement un ressort hélicoïdal associé est prévu.

10. Système de protection anti-renversement selon l'une quelconque des revendications 1 à 9, **caractérisé en ce que** pour le verrouillage de l'arceau de sécurité dans la position de soutien, respectivement une crémaillère en forme d'arc, montée sur l'arceau de sécurité, est prévue en relation avec un cliquet d'arrêt articulé en étant solidaire de la carrosserie.

11. Système de protection anti-renversement selon la revendication 10, **caractérisé en ce qu'**un dispositif pour le déverrouillage commun des deux cliquets d'arrêt est prévu.

12. Système de protection anti-renversement selon l'une quelconque des revendications 1 à 11, **caractérisé en ce que** le corps de support (1a) solidaire du véhicule possède une découpe (1a) pour une possibilité d'armement.
